(19) Europäisches Patentamt
European Patent Office
Office européen des brevets

(11) Numéro de publication : **0 289 397 B1**

(12) **FASCICULE DE BREVET EUROPEEN**

(45) Date de publication du fascicule du brevet :
22.05.91 Bulletin 91/21

(51) Int. Cl.⁵ : **B60R 19/26**

(21) Numéro de dépôt : 88400964.8

(22) Date de dépôt : 20.04.88

(54) Pare-chocs pour véhicule automobile et véhicule équipé d'un tel pare-chocs.

(30) Priorité : 30.04.87 FR 8706193

(43) Date de publication de la demande :
02.11.88 Bulletin 88/44

(45) Mention de la délivrance du brevet :
22.05.91 Bulletin 91/21

(84) Etats contractants désignés :
DE GB IT

(56) Documents cités :
DE-A- 2 509 351
US-A- 4 200 318

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Bodilis, Jean-Claude**
**43, rue du Four**
**F-94600 Choisy le Roi (FR)**

(74) Mandataire : **Durand, Yves Armand Louis et al**
**Cabinet Z. Weinstein 20, Avenue de Friedland**
**F-75008 Paris (FR)**

EP 0 289 397 B1

Jouve, 18, rue Saint-Denis, 75001 PARIS

## Description

La présente invention a essentiellement pour objet un pare-chocs pour les véhicules automobiles.

Elle vise également les véhicules équipés de tels pare-chocs.

On connaît déjà, d'après le brevet américain US-A-4 200 318 par exemple et selon le préambule de la revendication 1 des pare-chocs destinés à être montés sur la caisse d'un véhicule automobile et comprenant essentiellement une poutre transversale, des absorbeurs d'énergie interposés entre cette poutre et la caisse du véhicule, et des moyens de guidage constitués par un tube traversant chaque absorbeur et guidant le déplacement de la poutre par rapport à la caisse.

Toutefois, de tels pare-chocs ne remédient pas aux inconvénients résultant du porte à faux de la partie avant ou poutre transversale du pare-chocs par rapport à la structure de caisse et aux autres éléments constitutifs du pare-chocs, et ne permettent pas la maîtrise des éléments mobiles constituant le pare-chocs dans un plan horizontal lors des chocs qu'il subit.

Aussi, la présente invention a pour but de pallier ces inconvénients en proposant un pare-chocs perfectionné assurant notamment un guidage positif de la partie avant u poutre transversale du pare-chocs.

A cet effet, l'invention a pour objet un pare-chocs destiné à être monté sur la caisse d'un véhicule automobile par exemple et du type comprenant une poutre transversale, au moins deux absorbeurs d'énergie interposés entre la poutre et la caisse du véhicule, et des moyens de guidage constitués par un tube traversant chaque absorbeur et guidant le déplacement de la poutre par rapport à la caisse, caractérisé en ce que ledit tube comporte une extrémité en appui sur un élément fixe par rapport à la caisse, tandis que l'autre extrémité du tube constitue un élément de guidage de la poutre qui prend directement appui sur les absorbeurs d'énergie.

Suivant une autre caractéristique de l'invention, chaque absorbeur d'énergie prend appui du côté de la caisse par l'intermédiaire d'une entretoise qui comporte des moyens de retenue du tube venant en butée contre ladite entretoise.

On précisera encore ici que les moyens de retenue précités sont constitués par un logement, de préférence conique, ménagé dans l'entretoise et dont le fond sur lequel vient buter le tube correspond sensiblement au diamètre de ce tube.

Le pare-chocs selon cette invention est encore caractérisé par une bague ou analogue de configuration sphérique emmanchée sur chaque tube et permettant son centrage dans le logement de l'entretoise.

Suivant un mode de réalisation préféré, cette entretoise constitue une pièce unique formant au moins en partie une façade montée sur la caisse du véhicule.

Selon encore une autre caractéristique de l'invention la fixation de cette façade sur la caisse est avantageusement effectuée avec interposition d'une résine ou d'un mastic polymérisant à l'air, ce qui permet de rattraper les dispersions de cote des divers éléments constitutifs du pare-chocs.

L'invention apparaîtra mieux dans la description détaillée qui suit, et se réfère aux dessins annexés, donnés uniquement à titre d'exemple, et dans lesquels :

La figure 1 est une vue en coupe verticale d'un pare-chocs conforme à cette invention, la coupe étant pratiquée suivant l'axe d'un tube recevant l'absorbeur ; et

La figure 2 est une vue schématique éclatée et en perspective illustrant le montage des divers éléments du pare-chocs.

Suivant un exemple de réalisation, et en se reportant aux dessins annexés, on voit un pare-chocs 1 destiné à être monté sur la caisse 2 d'un véhicule et comprenant essentiellement une poutre transversale 3 montée sur la caisse 2 du véhicule par l'intermédiaire d'absorbeurs de chocs 4 interposés entre la poutre 3 et la caisse 2, laquelle est solidaire, comme connu en soi, de longerons 5. On a montré en 6 le capot moteur du véhicule sur lequel est monté le pare-chocs 1, et en 7 les phares situés à l'avant du véhicule.

Conformément à l'invention, les absorbeurs d'énergie, qui peuvent être réalisés par exemple en un matériau plastique alvéolé, sont montés chacun sur un tube 8 dont une extrémité 8a prend positivement appui sur une entretoise 9 prenant elle-même appui sur la caisse 2, et dont l'autre extrémité 8b constitue un élément de guidage de la poutre 3 qui prend appui sur les absorbeurs d'énergie 4.

La poutre transversale 3 est constituée d'un premier élément 3a en forme générale de U dans lequel s'emboîte un deuxième élément 3b également en U mais de moindre profondeur. Les éléments 3a et 3b sont assemblés par exemple par soudure.

L'élément 3b présente au moins deux découpes circulaires 3c dans lesquelles s'emmanchent les extrémités 8b des tubes 8. La forme ainsi réalisée permet l'emboîtement des absorbeurs 4 dans la poutre 3.

Sur l'élément 3a de la poutre 3 est chaussée une peau 3d formant en quelque sorte bouclier.

L'entretoise 9 est pourvue d'un logement 10 présentant une forme conique et dans le fond 10a duquel vient buter l'extrémité 8a du tube 8, laquelle extrémité possède un diamètre correspondant sensiblement au fond 10a du logement 10.

En d'autres termes, le tube 8 est immobilisé dans le fond du logement 10 de l'entretoise 9.

Une bague 11, de configuration sphérique est emmanchée sur le tube 8 et permet le centrage de ce tube dans le logement 10 de l'entretoise 9. Après centrage du tube 8, la bague 11 peut être fixée par collage, à l'aide de tout matériau approprié, dans le logement 10, ce qui contribue à l'immobilisation du tube 8 dans ledit logement.

On a montré en 12 des attaches d'un type quelconque permettant de solidariser les absorbeurs 4 de l'entretoise 9.

Cette dernière constitue de préférence une pièce unique formant une façade 13 montée sur la caisse 2 du véhicule à l'aide de moyens appropriés 14, tels que par exemple des boulons ou des rivets.

Il est à noter ici que la fixation de la façade 13 sur la caisse 2 est effectuée en interposant entre ces deux éléments une résine ou un mastic polymérisant à l'air, visible en 15.

Le montage du pare-chocs qui vient d'être décrit s'effectue de la façon suivante.

On effectue tout d'abord le pré-assemblage des divers éléments constitutifs du pare-chocs, lequel pré-assemblage s'effectue très rapidement.

Pour ce faire, on monte les tubes 8 dans le logement 10 de l'entretoise 9 à l'aide de la bague 11, comme expliqué précédemment.

Puis on enfile les absorbeurs d'énergie 4 sur ces tubes, et on les fixe sur ledit tube.

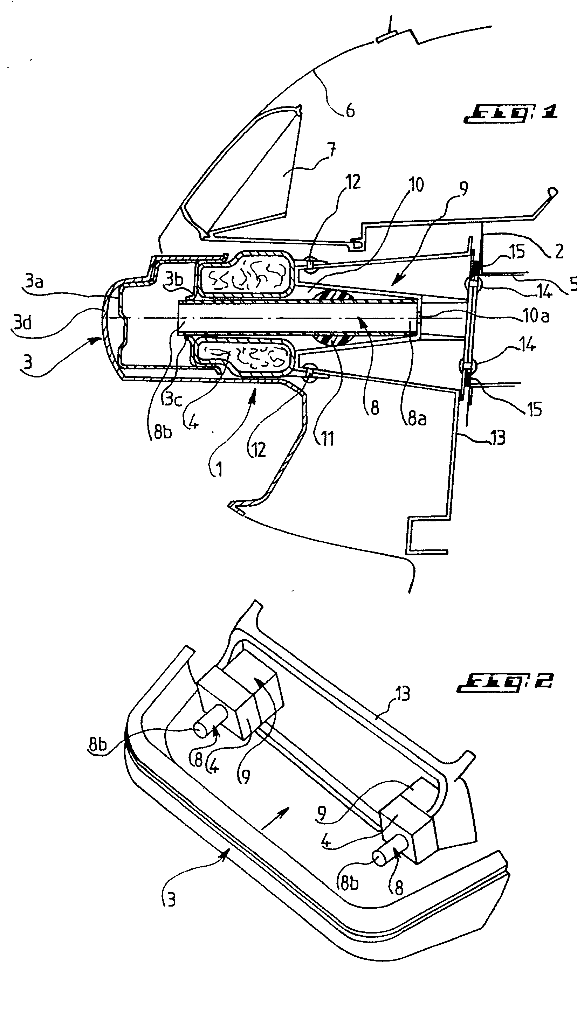

Ensuite, après avoir préalablement réalisé l'assemblage de l'élément métallique 3a et de la peau 3d constituant la partie avant ou poutre transversale 3 du pare-chocs 1, on monte cette poutre sur les tubes 8, comme on peut le comprendre en se reportant à la figure 2.

Enfin, on fixe l'ensemble du pare-chocs pré-assemblé comme expliqué ci-dessus, sur la caisse 2 en interposant une résine ou un mastic comme expliqué précédemment.

Il est important de remarquer ici que les absorbeurs 4 sont parfaitement guidés sur les tubes 8 lors de leur écrasement résultant d'un choc sur la poutre transversale 3. De même cette poutre est guidée, lors d'un choc, sur les tubes 8, et cela jusqu'à ce que ladite poutre rencontre l'extrémité 8b du tube 8, ce qui correspond à l'écrasement maximal des absorbeurs 4. A ce moment là, c'est-à-dire, lorsque la poutre 3 prend appui sur l'extrémité 8b des tubes 8, les efforts provoqués par le choc seront directement transmis à la caisse 2 par l'intermédiaire des tubes 8. Ces efforts seront bien entendu encaissés par les longerons 5 de la caisse.

On insistera ici sur l'assemblage particulièrement simple et sur le fonctionnement particulièrement fiable des divers éléments constituant le pare-chocs selon cette invention et dans lequel la poutre transversale est chaussée sur les tubes 8 tout comme le tube est chaussé dans l'entretoise sur laquelle il bute.

On a donc réalisé suivant l'invention un pare-chocs qui peut être assemblé et fixé très facilement sur la caisse d'un véhicule et qui présente toutes les qualités requises de rigidité sur le plan du porte à faux, de la maîtrise du déplacement de la poutre transversale en cas de chocs et de l'absorption des efforts dûs aux chocs tant au niveau des absorbeurs d'énergie du pare-chocs que de la caisse du véhicule.

Bien entendu, l'invention n'est nullement limitée au mode de réalisation décrit et illustré qui n'a été donné qu'à titre d'exemple.

## Revendications

1. Pare-chocs destiné à être monté sur la caisse (2) d'un véhicule automobile par exemple, et du type comprenant une poutre transversale (3), au moins deux absorbeurs d'énergie (4) inerposés entre la poutre (3) et la caisse (2) et un tube (8) traversant chaque absorbeur et guidant le déplacement de la poutre (3) par rapport à la caisse (2), chaque absorbeur d'énergie (4) prenant appui du côté de la caisse (2) par l'intermédiaire d'une entretoise (9) retenant le tube (8) qui vient en butée contre ladite entretoise, caractérisé en ce que la retenue du tube (8) dans l'entretoise (9) est assurée par un logement (10) de préférence conique, ménagé dans l'entretoise (9) et dont le fond (10a) sur lequel vient buter le tube (8) correspond sensiblement au diamètre de ce tube.

2. Pare-chocs selon la revendication 1, caractérisé par une bague ou analogue (11) de configuration sphérique emmanchée sur le tube (8) et permettant le centrage du tube dans le logement (10) ménagé dans l'entretoise (9).

3. Pare-chocs selon la revendication 1 ou 2, caractérisé en ce que l'entretoise précitée (9) constitue une pièce unique formant au moins en partie une façade (13) montée sur la caisse (2) du véhicule.

4. Pare-chocs selon la revendication 3, caractérisé en ce que la fixation de la façade précitée (13) sur la caisse (2) est effectuée avec interposition d'une résine ou d'un mastic polymérisant à l'air (15).

5. Véhicule automobile équipé d'un pare-chocs selon l'une quelconque des revendications 1 à 4.

## Ansprüche

1. Zum Anbringen zum Beispiel an dem Kasten (2) eines Kraftfahrzeugs bestimmter Stossfänger, der Gattung umfassend einen Querbalken (3), wenigstens zwei, zwischen dem Balken (3) und dem Wagen (2) zwischengeschaltete Energieaufnehmer (4) und ein, jeden Aufnehmer durchsetzendes und die Verschiebung des Balkens (3) gegenüber dem Kasten (2) führendes Rohr (8), wobei jeder Energieaufnehmer (4) sich kastenseitig (2) über ein Zwischenstück (9), das das Rohr (8), welches zum Anschlag an das besagte Zwischenstück kommt, zurückhält, abstützt, dadurch gekennzeichnet, dass das Zurückhalten des Rohres (8) in dem Zwischenstück (9) durch eine vorzugsweise kegelförmige, in dem Zwischenstück (9) gebildete, Aussparung (10) gewährleistet wird, deren Boden (10a), an welchem das Rohr (8) zum Anschlag kommt, wesentlich dem Durchmesser dieses Rohres entspricht.

2. Stossfänger nach Anspruch 1, gekennzeichnet durch einen, auf dem Rohr (8) aufgesteckten und das Zentrieren des Rohres in der, in dem Zwischenstück (9) gebildeten, Aussparung (10) gestattenden, kugelförmigen Ring oder dergleichen (11).

3. Stossfänger nach Anspruch 1 oder 2, dadurch gekennzeichnet, dass das vorgenannte Zwischenstück (9) ein einziges, wenigstens zum Teil eine an dem Kasten (2) des Fahrzeugs angeordnete Sirnwandung (13) bildendes, Teil bildet.

4. Stossfänger nach Anspruch 3, dadurch gekennzeichnet, dass die Befestigung der vorgenannten Sirnwandung (13) an dem Kasten (2) mit Zwischenschaltung eines Harzes oder eines in der.Luft polymerisierenden Kitts(15) durchgeführt wird.

5. Miteinem Stossfänger geniäss irgend einem der Ansprüche 1 bis 4 ausgerüstetes Kraftfahrzeug.

## Claims

1. Bumper intended to be mounted onto the body (2) of an automotive vehicle for example and of the type comprising a tranverse beam (3), at least two energy absorber (4) interposed between the beam (3) and the body (2) and a tube (8) extending through each absorber and guiding the displacement of the beam (3) with respect to the body (2), each energy absorber (4) bearing towards the body (2) through the medium of a spacer (9) retaining the tube (8) which abuts against the said spacer, characterized in that the retaining of the tube (8) within the spacer (9) is provided by a preferably conical recess (10) formed in the spacer (9) and the bottom (10a) of which, onto which the tube (8) is abutting, corresponds substantially to the diameter of this tube.

2. Bumper according to claim 1, characterized by a ring or the like (11) of spherical configuration fitted onto the tube (8) and allowing the centering of the tube within the recess (10) formed in the spacer (9).

3. Bumper according to claim 1 or 2, characterized in that the aforesaid spacer (9) constitutes a single piece forming at least in part a frontage (13) mounted onto the body (2) of the vehicle.

4. Bumper according to claim 3, characterized in that the fastening of the aforesaid frontage (13) onto the body (2) is effected with the interposition of a resin or of a mastic polymerizing in air (15).

5. Automotive vehicle fitted with a bumper according to any one of claims 1 to 4.

Fig. 1

Fig. 2